# EUROPÄISCHE PATENTSCHRIFT

(11) **EP 0 494 402 B1**
(45) Veröffentlichungstag und Bekanntmachung des Hinweises auf die Patenterteilung: **25.01.1995**
(21) Anmeldenummer: 91121466.6
(22) Anmeldetag: 14.12.1991
(51) Int. Cl.: B60J 1/18

(54) **Fahrzeugkabine, insbesondere für Baggerlader**
Vehicle cabin, especially for backhoe loaders
Cabine de véhicule, en particulier pour pelles chargeuses

(30) Priorität: 04.01.1991 US 638478
(43) Veröffentlichungstag der Anmeldung: 15.07.1992
(73) Patentinhaber: DEERE & COMPANY, Moline, Illinois 61265 (US)
(72) Erfinder: Larkin, John Joseph, Dubuque, Iowa 52001 (US); Kiefer, Edward Herman, Dubuque, Iowa 52001 (US); White, Robert John, Dubuque, Iowa 52001 (US)
(74) Vertreter: Feldmann, Bernhard

(56) Entgegenhaltungen:
- DE-U- 8 908 007
- US-A- 4 119 341
- US-A- 4 518 195

## Beschreibung

Die Erfindung bezieht sich auf eine Fahrzeugkabine, insbesondere für einen Baggerlader, mit einem rückwärtigen Fenster, das wenigstens einen oberen und einen unteren Fensterteil aufweist, wobei der obere Fensterteil an der Kabine angeschlagen und zwischen einer Schließstellung und einer Offenstellung vertikal gegen das Kabinendach verschwenkbar und der untere Fensterteil aus seiner Schließstellung entfernbar ist.

Derartige Fahrzeugkabinen finden vornehmlich an Baggerladern Verwendung, also an Baumaschinen, die frontseitig eine Ladeschaufel und heckseitig einen Bagger, wie einen Tieflöffel, aufweisen. Bei Arbeiten mit dem Heckbagger wird ein Fahrersitz um 180° gedreht, so daß die Bedienungsperson den Heckbagger leicht betätigen kann. Selbstverständlich sollte die Bedienungsperson eine ausgezeichnete Sicht auf die Arbeitsgeräte haben, weshalb moderne Fahrzeugkabinen rundum verglast sind. Für eine gute Ventilation lassen sich über 50% der Glasflächen öffnen.

Bei der Fahrzeugkabine, von der die Erfindung ausgeht (US-A-4 518 195), läßt sich der obere Fensterteil um ein oberes Scharnier in die Kabine in seine Offenstellung verschwenken. Der untere Fensterteil ist abbaubar und kann, wenn der untere Fensterbereich offen sein soll, an dem oberen Fensterteil lösbar angebracht werden. In einem solchen Fall wird er mit dem oberen Fensterteil in die Kabine verschwenkt, so daß sie die Bedienungsperson bei ihrer Arbeit nicht behindern.

Die mit der Erfindung zu lösende Aufgabe wird in einer verbesserten Verstellmöglichkeit des unteren Fensterteils gesehen. Diese Aufgabe ist nach der Erfindung dadurch gelöst worden, daß der untere Fensterteil an der Kabine verschiebbar angeschlossen und aus seiner Schließstellung in eine untere Offenstellung verstellbar ist. Auf diese Weise kann der untere Fensterteil mit einem Minimum an Aufwand in seine Offenstellung verbracht werden, in der der in der Kabine zur Verfügung stehende Raum nicht oder nur unwesentlich beeinträchtigt ist.

Die Sicht nach rückwärts kann noch dadurch verbessert werden, daß unterhalb des unteren Fensterteils ein weiterer Fensterteil angeordnet und der untere Fensterteil derart verschiebbar ist, daß er in seiner Offenstellung den weiteren Fensterteil überdeckt. Durch diese Maßnahmen bleiben die guten Sichtverhältnisse auch bei sich in seiner Offenstellung befindlichem unteren Fensterteil erhalten. Der weitere Fensterteil läßt sich in der Regel nicht öffnen.

Zum einfachen Verschieben des unteren Fensterteils ist nach einer Weiterbildung der Erfindung vorgesehen, daß die Kabine zwei Führungsschienen mit Führungsschlitzen aufweist, in denen der untere Fensterteil verschiebbar aufgenommen ist.

Hierzu kann der untere Fensterteil Führungsstifte aufweisen, die sich bis in die Führungsschlitze erstrecken.

Zweckmäßig kann der untere Fensterteil an seinen beiden Seiten je einen oberen und einen unteren Führungsstift aufweisen, die in je einem oberen und einem unteren Führungsschlitz geführt sind. Die oberen und unteren Führungsstifte können eine unterschiedliche Länge und die Führungschlitze damit eine unterschiedliche Tiefe zur besseren Führung aufweisen.

Nach einer Weiterbildung der Erfindung ist vorgesehen, daß die oberen und unteren Führungsschlitze an ihren oberen Enden nach innen oder außen abknickend ausgebildet sind. Damit befindet sich der untere Fensterteil in seiner Schließstellung in einer anderen Ebene als in seiner Offenstellung. Die Ebene der Schließstellung sollte in derselben Ebene wie die Schließstellung des oberen Fensterteils verlaufen, damit beide Fensterteile bündig aneinander anschließen. Zum Öffnen muß daher der untere Fensterteil zunächst auf die Bedienungsperson zugezogen oder von ihr fortgedrückt werden, bevor sich der untere Fensterteil nach unten verschieben läßt. Der Schließvorgang verläuft dann umgekehrt. Zwischen dem oberen und dem unteren Fensterteil kann eine Dichtung vorgesehen werden, die in der Schließstellung zusammenpressbar ist.

Im Einzelnen können die oberen Enden der oberen Führungsschlitze in einem rechten Winkel nach außen abgeknickt und die oberen Enden der unteren Führungsschlitze schräg nach außen abgeknickt verlaufend ausgebildet sein. Zum Öffnen des unteren Fensterteils werden durch diese Maßnahme die oberen Führungsstifte zunächst um die unteren Führungsstifte verschwenkt, bevor sich der untere Fensterteil nach unten verschieben läßt.

Schließlich ist der untere Fensterteil in seiner Schließstellung mit den Führungsschienen verriegelbar, wobei die Verriegelung zwei entgegen der Wirkung je einer Feder über je einen Ausklinkgriff verstellbare Verriegelungsstifte aufweisen kann, die in der Schließstellung des unteren Fensterteils selbsttätig in Verriegelungsöffnungen in den Führungsschienen einrasten. Zum Öffnen werden lediglich die beiden Ausklinkgriffe betätigt, die winkelhebelartig ausgebildet und über eine Totgangverbindung mit den Verriegelungsstiften verbunden sind.

Zum selbsttätigen Einrasten der Verriegelungsstifte in ihre Verriegelungsöffnungen kann nach einer Weiterbildung der Erfindung ferner vorgesehen sein, daß die Verriegelungsöffnungen zu den Führungsschlitzen seitlich versetzt und am oberen Ende je einer Rampe angeordnet sind.

In der Zeichnung ist ein nachfolgend näher erläutertes Ausführungsbeispiel der Erfindung dargestellt. Es zeigt:
- Fig. 1: einen Baggerlader in perspektivischer Rückansicht,
- Fig. 2: einen unteren Fensterteil mit einer im Schnitt dargestellten Verriegelung,
- Fig. 3: den unteren Fensterteil nach Fig. 2 in Seitenansicht,
- Fig. 4: eine Führungsschiene für den unteren Fensterteil in Seitenansicht und
- Fig. 5: die Führungsschiene nach Fig. 4 in Rückansicht.

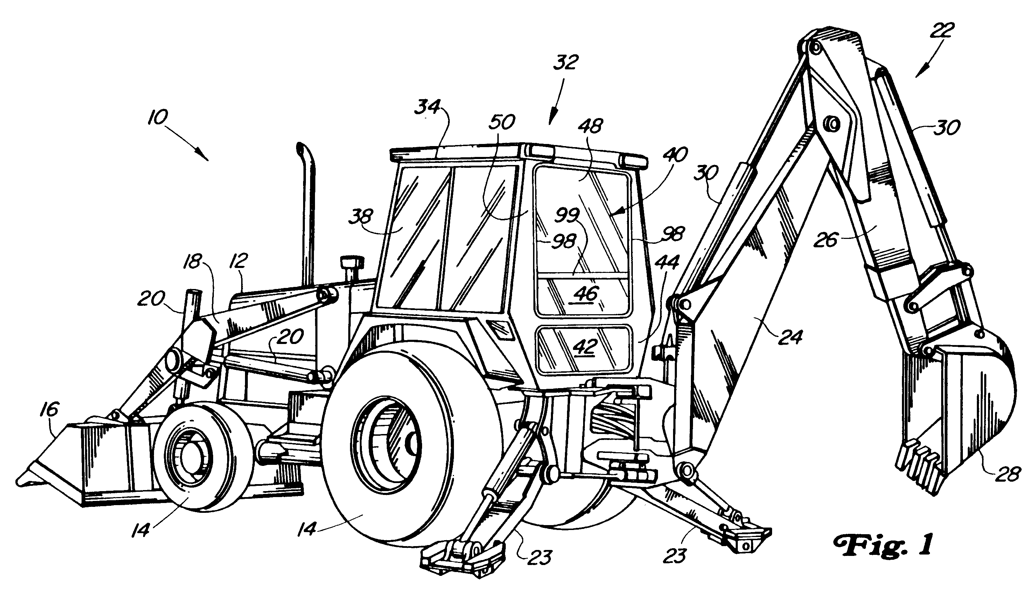

Der in der Fig. 1 dargestellte Baggerlader 10 ist mit einem Rahmen 12 und einem Fahrwerk 14 ausgerüstet, das beim Ausführungsbeispiel aus antreibbaren und lenkbaren Rädern besteht. An die Frontseite des Baggerladers 10 ist eine Ladeschaufel 16 über eine Ladeschwinge 18 angeschlossen. Die Betätigung der Schaufel und der Schwinge erfolgt über hydraulisch beaufschlagbare Zylinder 20.

An die Heckseite des Baggerladers ist ein Bagger 22 in Form eines Tieflöffels angeschlossen. Zur Stabilisierung dienen Auslegerstützen 23 und sein Ausleger ist mit 24, sein Löffelstiel mit 26 und seine Baggerschaufel ist mit 28 bezeichnet. Die Verstellung des Baggers 22 erfolgt über hydraulisch beaufschlagbare Zylinder 30.

Die Bedienung des Baggerladers erfolgt aus einer Fahrzeugkabine 32, die mit dem Rahmen 12 in zweckmäßiger Weise verbunden ist. Die Kabine hat einen ein Kabinendach 34 tragenden Rahmen, ein frontseitiges Fenster, Seitenfenster 38 und ein im wesentlichen in einer Ebene angeordnetes wölbungsfreies rückwärtiges Fenster 40. Das rückwärtige Fenster besteht beim Ausführungsbeispiel aus drei Fensterteilen 42, 46 und 48, von denen die beiden oberen geöffnet werden können. Der unterste und in den Ansprüchen als weiterer Fensterteil 42 bezeichnete Fensterteil kann entfallen. Er ist in einem von der Kabine gebildeten Bodenrahmen 44 angeordnet und verbessert die Sicht auf den Bagger. Der obere Fensterteil 48 und der unmittelbar darunterliegende und in den Ansprüchen als unterer Fensterteil bezeichnete Fensterteil 46 sind in einem oberen Rahmen 50 angeordnet, der ebenfalls von der Kabine gebildet wird. Alle drei Fensterteile erlauben eine ausgezeichnete Sicht nach rückwärts, wobei sich die beiden oberen für eine gute Luftzirkulation öffnen lassen.

Der obere Fensterteil 48 ist mit seiner oberen Kante in bekannter Weise oben an das Kabinendach angeschlagen und läßt sich in seine Offenstellung vertikal gegen die Innenseite des Kabinendaches in die Kabine hineinverschwenken. In dieser Stellung ist der obere Fensterteil über nicht dargestellte Verriegelungselemente feststellbar.

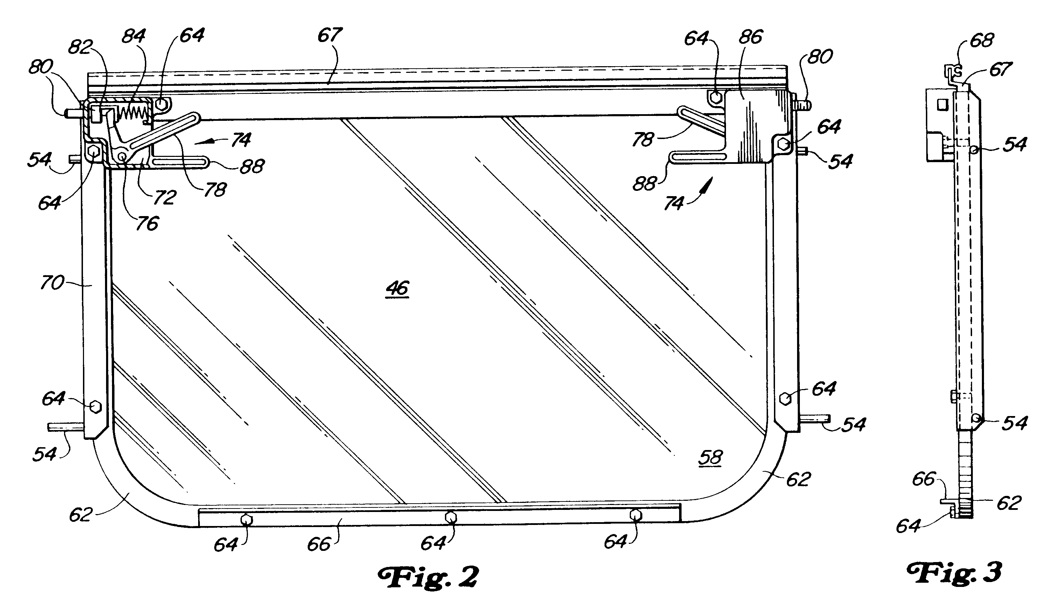

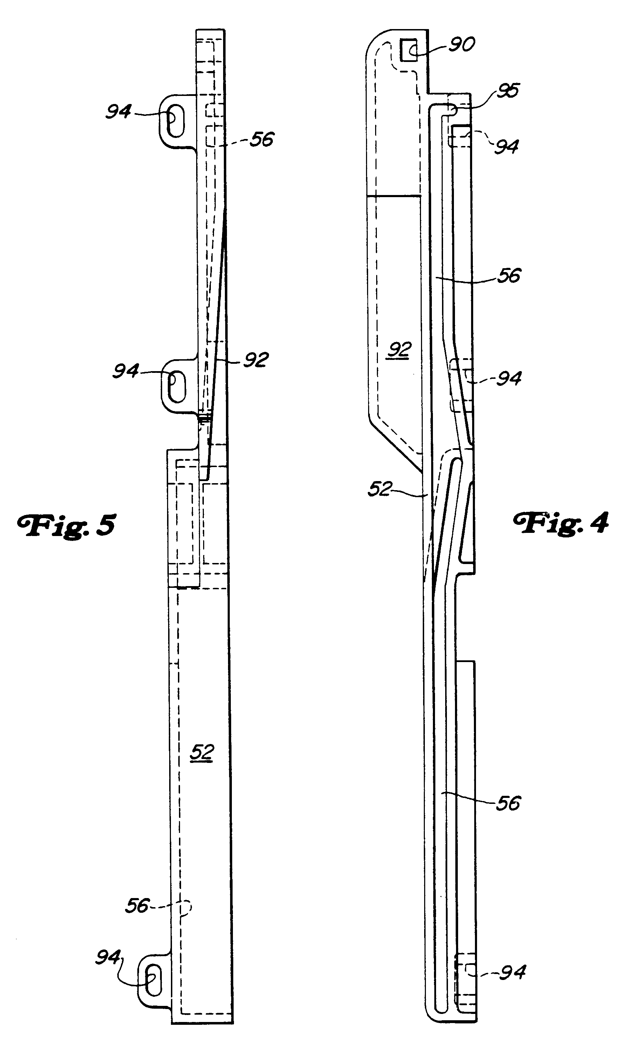

Der untere Fensterteil 46, der im einzelnen gut aus den Fig. 2 und 3 erkennbar ist, ist in zwei vertikal verlaufenden Führungsschienen 52 verschiebbar, die wiederum in den Fig. 4 und 5 gezeigt sind. Die Führungsschienen 52 sind beiderseits des unteren Fensterteils 46 vorgesehen und erstrecken sich nach unten bis in den Bereich der weiteren Fensterteile 42, oder, wenn dieser nicht vorgesehen ist, in einen unteren Kabinenbereich. Der untere Fensterteil 46 ist an seinen beiden Seiten mit einem oberen und einem unteren Führungsstift 54 versehen, die unterschiedliche Längen aufweisen können und in Führungsschlitzen 56 in den Führungsschienen 52 geführt sind. Grundsätzlich braucht an jeder Führungsschiene 52 nur ein Führungsschlitz 56 vorgesehen zu werden. Beim Ausführungsbeispiel sind jedoch jeweils zwei Führungsschlitze 56 erkennbar, und zwar ein oberer für den oberen Führungsstift und ein unterer für den unteren Führungsstift. Diese beiden Führungsschlitze haben dann auch unterschiedliche Tiefen.

Der untere Fensterteil 46 weist einen seine Glasscheibe 58 zumindest teilweise umgebenden Aluminiumrahmen 62 mit einer entsprechenden Dichtung auf, die beide über Schrauben 64 mit der Glasscheibe 58 verbunden sind. An der Unterkante des unteren Fensterteils 46 ist noch ein Versteifungsteil 66 vorgesehen. An der Oberseite des unteren Fensterteils kann noch eine Dichtleiste 67 angeschraubt sein, die dann ein kompressibeles etwa rohrförmig ausgebildetes Dichtelement 68 aufweist.

Die beiden Seiten der Glasscheibe 58 U-förmig umfassende Leisten 70 sind über die Schrauben 64 mit dem unteren Fensterteil 46 verbunden und nehmen die oberen und unteren Führungsstifte 54 auf. An ihren oberen Enden sind die Seitenleisten 70 noch mit Platten 72 ausgerüstet, die die rückwärtigen Tragteile von Verriegelungen 74 bilden. Jede Platte 72 ist mit einem Schwenkzapfen 76 ausgerüstet.

Jede Verriegelung 74 ist mit einem winkelhebelartig ausgebildeten Ausklinkgriff 78, der auf dem Schwenkzapfen 76 aufsitzt, einem Verriegelungsstift 80, der über eine Totgangverbindung 82 mit dem Ausklinkgriff in Wirkverbindung steht, einer Feder 84, die den Verriegelungsstift nach außen schieben will, und mit einem Plastikdeckel 86, der einen stationären Griff 88 aufweist, versehen.

Die Verriegelungen 74 dienen zum Festellen des unteren und gegebenenfalls auch des oberen Fensterteils in deren Schließstellungen. Zum Feststellen greifen die Verriegelungsstifte 80 in Verriegelungsöffnungen 90 ein, die in den zweckmäßig aus Plastik hergestellten Führungsschienen 52 vorgesehen sind. Da das Dichtelement 68 in der verriegelten Stellung des unteren Fensterteils 46 das obere Fensterteil 48 hintergreift, wird auch dieses in seiner Schließstellung gehalten, ohne daß zusätzliche Verriegelungsteile erforderlich werden.

Durch Herunterdrücken der Ausklinkgriffe 78 werden die in den Verriegelungen 74 entsprechend geführten Verriegelungsstifte 80 aus den Verriegelungsöffnungen 90 gegen die Wirkung der Federn 84 herausgezogen und der untere Fensterteil 46 kann in der nachfolgend noch zu erläuternden Weise geöffnet werden.

Die beiden Führungsschienen 52 weisen noch je eine Rampe 92 und für ihre Verschraubung mit der Kabine Befestigungslöcher 94 auf. Die Führungsschlitze 56 verlaufen im wesentlichen vertikal, wobei die Führungsschlitze für die oberen und kürzeren Führungsstifte 54 noch mit einem kurzen horizontal nach außen verlaufenden Endstück 95 ausgerüstet sind. Die oberen ebenfalls geschlossenen Enden der Führungsschlitze für die unteren Führungsstifte sind schräg nach außen geneigt verlaufend angeordnet.

Befindet sich der untere Fensterteil 46 in seiner Schließstellung und soll geöffnet werden, so muß die Bedienungsperson zunächst die Ausklinkgriffe 78 nach unten verschwenken, wodurch die Verriegelung gelöst wird. Danach zieht die Bedienungsperson die Ausklinkgriffe 78 auf sich zu, wobei die oberen Führungsstifte 54 um die unteren Führungsstifte 54 verschwenken und der untere Fensterteil 46 nach innen klappt bis die oberen Führungsstifte in den vertikalen Bereich der Führungsschlitze 56 zu liegen kommen. Erst dann kann der untere Fensterteil 46 nach unten in den Führungsschlitzen verschoben werden. Bei diesem Vorgang wird auch das Dichtelement 68 den oberen Fensterteil 48 freigeben, der dann ebenfalls durch Hochschwenken vermittels einer Gasdruckfeder in seine Offenstellung verbracht werden kann. Der obere Fensterteil 48 kann an seinem unteren Ende noch eine äußere Dichtleiste 99 aufweisen, die in der Schließstellung gegen die obere Kante des unteren Fensterteils 46 von außen anliegt und zusammen mit dem Dichtelement 68 den Spalt zwischen oberen und unteren Fensterteil in deren Schließstellung sicher abschließt.

Soll der untere Fensterteil 46 wieder geschlossen werden, so laufen die vorstehend zum Öffnen geschilderten Vorgänge im wesentlichen umgekehrt ab. Es brauchen lediglich die stationären Griffe 88 erfaßt und der untere Fensterteil 46 kann hoch geschoben werden. Infolge der vorgesehenen Rampen 92 und der Totgangverbindung 82 werden beim Hochschieben nur die Verriegelungsstifte 80 nach innen gedrückt und rasten infolge der Federn 84 selbsttätig in die Verriegelungsöffnungen 90 ein, wenn der untere Fensterteil bei Erreichen der oberen Enden der Führungsschlitze nicht mehr weiter nach oben verstellt werden kann und nach außen gedrückt wird. Befindet sich dann auch der obere Fensterteil in seiner Schließstellung, so wird er automatisch mitverriegelt.

## Patentansprüche

1. Fahrzeugkabine (32), insbesondere für einen Baggerlader (10), mit einem rückwärtigen Fenster (40), das wenigstens einen oberen und einen unteren Fensterteil (48, 46) aufweist, wobei der obere Fensterteil (48) an der Kabine (32) angeschlagen und zwischen einer Schließstellung und einer Offenstellung vertikal gegen das Kabinendach (34) verschwenkbar und der untere Fensterteil (46) aus seiner Schließstellung entfernbar ist, dadurch gekennzeichnet, daß der untere Fensterteil (46) an der Kabine (32) verschiebbar angeschlossen und aus seiner Schließstellung in eine untere Offenstellung verstellbar ist.

2. Fahrzeugkabine nach Anspruch 1, dadurch gekennzeichnet, daß unterhalb des unteren Fensterteils (46) ein weiterer Fensterteil (42) angeordnet und der untere Fensterteil (46) derart verschiebbar ist, daß er in seiner Offenstellung den weiteren Fensterteil (42) überdeckt.

3. Fahrzeugkabine nach Anspruch 1 oder 2, dadurch gekennzeichnet, daß die Kabine (32) zwei Führungsschienen (52) mit Führungsschlitzen (56) aufweist, in denen der untere Fensterteil (46) verschiebbar aufgenommen ist.

4. Fahrzeugkabine nach Anspruch 3, dadurch gekennzeichnet, daß der untere Fensterteil (46) Führungsstifte (54) aufweist, die sich bis in die Führungsschlitze (56) erstrekken.

5. Fahrzeugkabine nach Anspruch 3, dadurch gekennzeichnet, daß der untere Fensterteil (46) an seinen beiden Seiten je einen oberen und einen unteren Führungsstift (54) aufweist, die in je einem oberen und einem unteren Führungsschlitz (56) geführt sind.

6. Fahrzeugkabine nach Anspruch 5, dadurch gekennzeichnet, daß die oberen und unteren Führungsschlitze (56) an ihren oberen Enden nach innen oder außen abknickend ausgebildet sind.

7. Fahrzeugkabine nach Anspruch 6, dadurch gekennzeichnet, daß die oberen Enden der oberen Führungsschlitze (56) in einem rechten Winkel nach außen abgeknickt und die oberen Enden der unteren Führungsschlitze (56) schräg nach außen abgeknickt verlaufend ausgebildet sind.

8. Fahrzeugkabine nach einem oder mehreren der vorherigen Ansprüche, dadurch gekennzeichnet, daß der untere Fensterteil (46) in seiner Schließstellung mit den Führungsschienen (52) verriegelbar ist.

9. Fahrzeugkabine nach Anspruch 8, dadurch gekennzeichnet, daß die Verriegelung zwei entgegen der Wirkung je einer Feder (84) über je einen Ausklinkgriff (78) verstellbare Verriegelungsstifte (80) aufweist, die in der Schließstellung des unteren Fensterteils (46) selbsttätig in Verriegelungsöffnungen (90) in den Führungsschienen (52) einrasten.

10. Fahrzeugkabine nach Anspruch 9, dadurch gekennzeichnet, daß die Verriegelungsöffnungen (90) zu den Führungsschlitzen (56) seitlich versetzt und am oberen Ende je einer Rampe (92) angeordnet sind.

## Claims

1. Vehicle cabin (32), in particular for a backhoe loader (10), with a rear window (40), which has at least one upper and one lower window section (48, 46), wherein the upper window section (48) is coupled to the cabin (32) and may be swung vertically towards the cabin roof (34) between a closed position and an open position and the lower window section (46) may be removed from its closed position, characterised in that the lower window section (46) is connected to the cabin (32) to allow sliding movement and may be shifted out of its closed position into a lower open position.

2. Vehicle cabin according to Claim 1, characterised in that a further window section (42) is provided below the lower window section (46) and the lower window section (46) may slide in such a way that it overlaps the further window section (42) in its open position.

3. Vehicle cabin according to Claim 1 or 2, characterised in that the cabin (32) has two guide rails (52) with guide slots (56), into which the lower window section (46) may slide.

4. Vehicle cabin according to Claim 3, characterised in that the lower window section (46) has guide dowels (54), which extend into the guide slots (56).

5. Vehicle cabin according to Claim 3, characterised in that on each of its two sides, the lower window section (46) has an upper and a lower guide dowel (54), which are guided into an upper and a lower guide slot (56) in each case.

6. Vehicle cabin according to Claim 5, characterised in that the upper and lower guide slots (56) are bent inwards or outwards at their upper ends.

7. Vehicle cabin according to Claim 6, characterised in that the upper ends of the upper guide slots (56) are bent outwards at a right angle and the upper ends of the lower guide slots (56) are bent to extend obliquely outwards.

8. Vehicle cabin according to one or several of the preceding claims, characterised in that the lower window section (46) may be locked in its closed position with the guide rails (52).

9. Vehicle cabin according to Claim 8, characterised in that the locking arrangement has two locking pins (80), which may each be adjusted against the action of a spring (84) by means of a respective release handle (78) and which automatically latch into locking openings (90) in the guide rails (52) when the lower window section (46) is in closed position.

10. Vehicle cabin according to Claim 9, characterised in that the locking openings (90) are laterally offset to the guide slots (56) and are each provided at their upper end with a slope (92).

## Revendications

1. Cabine de véhicule (32), notamment pour une pelle chargeuse (10), comportant une fenêtre arrière (40), qui possède au moins une partie supérieure et une partie inférieure (48,46), et dans lequel la partie supérieure (48) de la fenêtre peut être raccordée à la cabine (32) et peut être déplacée par basculement vertical entre une position fermée et une position ouverte, contre le toit (34) de la cabine, tandis que la partie inférieure (46) de la fenêtre peut être écartée de sa position fermée, caractérisée en ce que la partie inférieure (46) de la fenêtre est raccordée, de manière à être déplaçable, à la cabine (32) et peut être déplacée de sa position fermée dans une position ouverte inférieure.

2. Cabine de véhicule selon la revendication 1, caractérisée en ce qu'une autre partie (42) de la fenêtre est disposée au-dessous de la partie inférieure (46) de la fenêtre et que la partie inférieure (46) de la fenêtre est déplaçable de telle sorte que, dans sa position ouverte, elle recouvre l'autre partie (42) de la fenêtre.

3. Cabine de véhicule selon la revendication 1 ou 2, caractérisée en ce que la cabine (32) possède deux rails de guidage (52) comportant des fentes de guidage (56), dans lesquelles la partie inférieure (46) de la fenêtre est logée de manière à être déplaçable.

4. Cabine de véhicule selon la revendication 3, caractérisée en ce que la partie inférieure (46) de la fenêtre comporte des tiges de guidage (54), qui s'étendent jusque dans les fentes de guidage (56).

5. Cabine de véhicule selon la revendication 3, caractérisée en ce que la partie inférieure (46) de la fenêtre comporte, sur ses deux côtés, respectivement une tige supérieure de guidage et une tige inférieure de guidage (54), qui sont guidées respectivement dans une fente supérieure de guidage et une fente inférieure de guidage (56).

6. Cabine de véhicule selon la revendication 5, caractérisée en ce que les fentes supérieure et inférieure de guidage (56) sont réalisées, au niveau de leurs extrémités supérieures, de manière à être coudées vers l'intérieur ou vers l'extérieur.

7. Cabine de véhicule selon la revendication 6, caractérisée en ce que les extrémités supérieures des fentes supérieures de guidage (56) sont coudées à angle droit vers l'extérieur et que les extrémités supérieures des fente intérieures de guidage (56) sont agencées en étant coudées obliquement vers l'extérieur.

8. Cabine de véhicule selon une ou plusieurs des revendications précédentes, caractérisée en ce que la partie inférieure (46) de la fenêtre peut être verrouillée, dans sa position fermée, avec les rails de guidage (52).

9. Cabine de véhicule selon la revendication 8, caractérisée en ce que le système de verrouillage comporte deux tiges de verrouillage (80), qui peuvent être déplacées à l'encontre de l'action de ressorts respectifs (84), par l'intermédiaire de poignées respectives de désenclenchement (78) et qui s'encliquettent automatiquement dans les ouvertures de verrouillage (90) dans les rails de guidage (52), lorsque la partie inférieure (46) de la fenêtre est dans la position fermée.

10. Cabine de véhicule selon la revendication 9, caractérisée en ce que les ouvertures de verrouillage (90) sont disposées en étant décalées latéralement par rapport aux fentes de guidage (56) et sont disposées sur l'extrémité supérieure de rampe (92) respectives.
